# EUROPÄISCHE PATENTSCHRIFT

(11) **EP 1 923 684 B1**
(45) Veröffentlichungstag und Bekanntmachung des Hinweises auf die Patenterteilung: **16.02.2011**
(21) Anmeldenummer: 06024039.7
(22) Anmeldetag: 20.11.2006
(51) Int. Cl.: G01L 5/10

(54) **Vorrichtung zum Messen einer Zugkraft innerhalb einer Materialbahn oder eines Materialstranges**
Device for measuring a traction force within a web of material or a strand of material
Dispositif destiné à la mesure d'une force de traction à l'intérieur d'une nappe de tissu ou d'un écheveau de fil

(43) Veröffentlichungstag der Anmeldung: 21.05.2008
(73) Patentinhaber: Texmag GmbH Vertriebsgesellschaft, 8800 Thalwil (CH)
(72) Erfinder: Lönner, Wolfgang, 86391 Stadtbergen (DE); Rössle, Thomas, 86368 Gersthofen-Batzenhofen (DE); Palatzky, Roland, 86356 Neusäss (DE)
(74) Vertreter: Peterreins, Frank

(56) Entgegenhaltungen:
- EP-B1- 0 621 469
- BE-A3- 1 008 135
- DE-A1- 2 813 719
- DE-A1- 4 204 231
- US-A1- 2004 244 504

## Beschreibung

### Technisches Gebiet

Die vorliegende Erfindung betrifft eine Vorrichtung zum Messen einer Zugkraft innerhalb einer Materialbahn oder eines Materialstranges. Die vorliegende Erfindung umfasst außerdem ein Verfahren, das eine Vorrichtung zum Messen einer Zugkraft innerhalb einer Materialbahn oder eines Materialstranges verwendet, bzw. eine Anlage, die eine derartige Vorrichtung umfasst.

### Stand der Technik

Im Stand der Technik sind Vorrichtungen zum Messen einer Zugkraft innerhalb einer Materialbahn oder eines Materialstranges bekannt.

EP 0 621 469 B1 offenbart eine Zugkraftmesseinrichtung für die Messung von Zugkräften von laufenden Endlosmaterialien, insbesondere von Materialbahnen oder Fäden. Diese Zugkraftmesseinrichtung ist auf einer ortsfest eingespannten Wellenachse angeordnet und weist einen Einspannbereich, mit einem massiven geschlossenen Ring mit Durchgangsbohrung, und einen Lagerbereich auf, welcher in Bezug auf die Welle in Kraftrichtung frei bewegt werden kann. Einspannbereich und Lagerbereich sind mittels Biegefeder miteinander verbunden.

Für den massiven geschlossenen Ring im Einspannbereich erfordert diese Konstruktion sehr hohe Fertigungsgenauigkeiten, d.h. sehr kleinen Fertigungstoleranzen. Zudem ist die Montage der Zugkraftmesseinrichtung auf der Wellenachse schwierig.

DE 42 04 231 A1 offenbart eine Zugkraftmeßeinrichtung für laufende Fäden oder dgl. die einen Doppelbiegebalken aufweist, der neben der zu messenden Kraft unter dem Einfluß einer parasitären Kraft steht. Die zu messende Kraft und die parasitäre Kraft werden über einen Topf in den Doppelbiegebalken eingeleitet, der die Krafteinleitungsstelle in Richtung zum eingespannten Ende des Doppelbiegebalkens verlegt.

BE-A3-1 008 135 offenbart eine Vorrichtung und ein Verfahren zum Bestimmen der Kettfadenspannung bei Webmaschinen.

### Zusammenfassung der Erfindung

Die Aufgabe der vorliegenden Erfindung ist es, eine Vorrichtung zum Messen einer Zugkraft innerhalb einer oder mehrerer Materialbahnen oder Materialstränge weiterzuentwickeln, welche eine verbesserte Kraftaufnahme, sowie eine präzisere Messung bei gleichzeitig einfacherer Fertigung und Montage ermöglicht.

Eine weitere Aufgabe der Erfindung ist es, eine Vorrichtung zum Messen einer Zugkraft innerhalb einer oder mehrerer Materialbahnen oder eines Materialstränge geringer Breite bereitzustellen.

Diese Aufgaben werden durch eine Vorrichtung gemäß Anspruch 1 sowie ein Verfahren gemäß Anspruch 12 und eine Anlage gemäß Anspruch 19 gelöst. Die abhängigen Patentansprüche enthalten vorteilhafte Ausgestaltungen der Erfindung.

Eine derartige erfindungsgemäße Vorrichtung wird verwendet, insbesondere in Anlagen zum Befördern und/oder Verarbeiten von Materialbahnen oder Materialsträngen, zum Messen einer Zugkraft innerhalb einer Materialbahn oder eines Materialstrangs bzw. einer Kraft, die von der Materialbahn oder Materialstrang auf die Vorrichtung ausgeübt wird. Alternativ kann auch eine Übertragungskraft, die aus der von der Materialbahn oder dem Materialstrang auf die Vorrichtung ausgeübten Kraft resultiert, gemessen werden.

Die Vorrichtung umfasst einen Walzenkörper, mindestens ein Lager, auf dem der Walzenkörper drehbar gelagert ist, und mindestens ein erstes Kraftübertragungselement zum Übertragen der Übertragungskraft. Das erste Kraftübertragungselement ist dazu ausgelegt auf die Übertragungskraft durch eine Dehnung, Stauchung oder sonstige Formveränderung in einer Richtung parallel zur Drehachse des mindestens einen Walzenkörpers zu reagieren. Das mindestens eine Lager kann ein Wälzlager, insbesondere ein Kugellager, insbesondere ein Pendelkugellager sein. Der Durchmesser des Walzenkörpers kann zwischen 40 mm und 200 mm liegen, insbesondere zwischen 60 mm und 120mm.

Weiterhin umfasst die Vorrichtung mindestens einen Sensor, der mit dem ersten Kraftübertragungselement in Verbindung steht. Der Sensor wird in einer bevorzugten Ausführungsform durch einen Dehnmessstreifen (DMS) gebildet. Das erste Kraftübertragungselement kann dabei mindestens ein elastisches Element, insbesondere einen Steg, umfassen, auf dem mindestens einer der Sensoren angeordnet ist. Wird ein Steg mit DMS verwendet, so verbiegt die Übertragungskraft den Steg und dehnt bzw. staucht den DMS. Der Begriff "Element" soll hier so verstanden werden, dass dieses auch integrierter Teil des ersten Kraftübertragungselementes sein kann.

Die Vorrichtung ist auf einer Welle montiert , welche im Inneren des zugehörigen Walzenkörpers in Richtung dessen axialer Längsausdehnung angeordnet ist. Das erste Kraftübertragungselement ist an einem ersten Ende (Lagerbereich) beweglich auf der Welle angeordnet, so dass sich das erste Ende bei Einwirkung der Kräfte in eine Richtung senkrecht zur Drehachse des Walzenkörpers zur Welle hin absenken kann. Dies wird erreicht, indem in diesem Bereich zwischen dem ersten Kraftübertragungselement und der Welle ein ausreichendes radiales Spiel ausgebildet ist. Das erste Ende des ersten Kraftübertragungselementes kann ein radial ausgedehntes Element sein, insbesondere ein ringförmiges Element. An seinem zweiten Ende (Einspannbereich) liegt das erste Kraftübertragungselement fest auf der Welle auf. Die Welle kann sowohl einseitig als auch beidseitig mit einem Träger verbunden sein.

Das zweite Ende des ersten Kraftübertragungselementes, welches fest auf der Welle aufliegt, kann mindestens zweitteilig ausgebildet sein. Das zweite Ende des Kraftübertragungselementes kann dabei mit mindestens drei Auflageflächen auf der Welle aufliegen. In einer bevorzugten Ausführungsform kann die Innenseite der zwei Teile jeweils mit mindestens zwei Auflageflächen auf der Welle aufliegen, wobei im Bereich zwischen zwei Auflageflächen ein Spiel zwischen der Innenseite des Teils und der Welle gebildet wird. Weiterhin kann das zweite Ende eine Durchgangsbohrung aufweisen, um das erste Kraftübertragungselement insbesondere durch eine Schraubverbindung fest mit der Welle zu verbinden.

Durch diese Anordnung wird eine einfacherer Fertigung und Montage ermöglicht. Das erste Kraftübertragungselement darf im Bereich seines zweiten Endes größere Fertigungstoleranzen aufweisen und ist gleichzeitig einfacher montierbar, da es sich der Welle in diesem Bereich flexibel anpasst. Gleichzeitig wird weiterhin eine präzise Messung gewährleistest, da eine Verdrehung des ersten Kraftübertragungselementes auf Grund von Übertragungskräften wegen der Fixierung der Welle an den Auflageflächen nicht auftreten kann. Des Weiteren wird eine starrere Verbindung mit der Welle und somit höhere Biegesteifigkeit im Bereich des zweiten Endes des ersten Kraftübertragungselementes erreicht, wodurch auch die Eigenfrequenz der Anordnung in diesem Bereich steigt. Eine Schwingungsanregung der Vorrichtung durch eine Drehung der Walze führt also zu einer Frequenz, die erheblich unter der Eigenfrequenz der Anordnung liegt, so dass das Schwingungsverhalten im Bereich des zweiten Endes des ersten Kranübertragungselementes verbessert ist.

Die Auflageflächen können dabei eben ausgebildet sein. Es kann vorteilhaft sein, dass die Verlängerungen zweier Auflageflächen eines Teils des zweiten Endes des ersten Kraftübertragungselementes einen Winkel im Bereich von 90° bis 140° bilden, insbesondere im Bereich von 105° bis 115°.

Die Vorrichtung umfasst mindestens ein zweites Kraftübertragungselement, das sich im Inneren des zugehörigen Walzenkörpers erstreckt und das mit dem ersten Kraftübertragungselement verbunden ist. Diese Verbindung kann durch Ausbilden eines Anschlag- bzw. Positionierungsringes in dem ersten Kraftübertragungselement auf der einen Seite und einem Spannring auf der anderen Seite, welcher in eine Nut des ersten Kraftübertragungselementes passt, erreicht werden. Es kann aber auch eine andere konventionelle Verbindungstechnik eingesetzt werden. Alternativ kann diese Verbindung auch so verstanden werden, dass das zweite Kraftübertragungselement integrierter Teil des ersten Übertragungselementes ist.

Das zweite Kraftübertragungselement ist derart ausgelegt , dass es ein Biegemoment, das durch die Kräfte der Materialbahn oder des Materialstrangs erzeugt wird und das in einer Richtung senkrecht zur Drehachse des Walzenkörpers wirkt, auf das erste Kraftübertragungselement überträgt. Dabei können der Sensor und das erste Kraftübertragungselement derart ausgelegt sein dass, sie das Biegemoment messen können, welches an einem ersten Ende des ersten Kraftübertragungselementes eingeleitet wird. Das zweite Kraftübertragungselement umfasst zum Übertragen des Biegemomentes mindestens ein freitragendes Kraftübertragungselement. Dieses kann integrierter Teil des zweiten Kraftübertragungselementes sein oder mit diesem verbunden sein. Das freitragende Kraftübertragungselement erstreckt sich in einer Richtung parallel zur Drehachse des Walzenkörpers. Auf dem freitragenden Kraftübertragungselement können, in Bezug auf dessen axiale Längsausdehnung, mindestens zwei Lager voneinander beabstandet angeordnet sein. Der Vorteil dieser Konstruktion liegt in einer verbesserten Kraftaufnahme im Gegensatz zum Stand der Technik.

Eine solche Konstruktion ermöglicht es zudem eine Kraftmessvorrichtung geringer Breite bereitzustellen, welche nur einen einzigen Lagerbereich bzw. nur ein einziges erstes und/oder zweites Kraftübertragungselement umfasst. Gleichzeitig ist ein Kippen des Walzenkörpers dabei nicht möglich, da das Biegemoment, das durch die Kräfte der Materialbahn oder des Materialstranges erzeugt wird, der Kippbewegung entgegenwirkt. Die Breite des Walzenkörpers in axialer Längsausdehnung kann bei einer derartigen Anordnung zwischen 70 mm und 200 mm liegen, insbesondere zwischen 90 mm und 150 mm.

Es kann vorteilhaft sein die mindestens zwei Lager auf dem freitragenden Kraftübertragungselement in Bezug auf dessen axiale Längsausdehnung symmetrisch zueinander anzuordnen. Des Weiteren kann mindestens ein Lager in axialer Längsausdehnung des zugehörigen Walzenkörpers im Wesentlichen an der gleichen Position angeordnet sein wie das zugehörige zweite Kraftübertragungselement, und mindestens ein Lager am freitragenden Ende des zugehörigen freitragenden Kraftübertragungselementes angeordnet sein. Das freitragende Kraftübertragungselement kann ein radial ausgedehntes Element sein, insbesondere ein ringförmiges Element bzw. eine Hülse, die koaxial im Inneren des Walzenkörpers angeordnet ist.

Es kann eine "segmentierte" Kraftmessvorrichtung mit mindestens zwei nebeneinander angeordneten Walzenkomponenten bereitgestellt werden. Durch eine solche Vorrichtung wird die gleichzeitige Messung mehrerer nebeneinander laufender Materialbahnen oder Materialstränge ermöglicht. Eine Walzenkomponente wird jeweils durch einen Walzenkörper, ein erstes Kraftübertragungselement und, falls vorhanden, ein zweites Kraftübertragungselement gebildet. Die mindestens zwei Walzenkörper werden in Bezug auf die Drehachse des Walzenkörpers koaxial nebeneinander angeordnet. Die mindestens zwei Walzenkomponenten können nacheinander auf die Welle aufgeschoben und mit dieser verbunden werden. Die Verbindung kann insbesondere mittels einer Schraubverbindung durch eine Durchgangsbohrung im zweiten Ende des ersten Kraftübertragungselementes erfolgen. Es kann aber auch eine andere konventionelle Verbindungstechnik eingesetzt werden. In einer bevorzugten Ausführungsform umfasst jede Walzenkomponente nur einen einzigen Lagerbereich bzw. ein einziges erstes und/oder zweites Kraftübertragungselement, wie oben beschrieben. Auf diese Weise weisen die einzelnen nebeneinander angeordneten Walzenkomponenten eine nur geringe Breite auf und eine kompakte und einfache Bauform der "segmentierten" Kraftmessvorrichtung kann so realisiert werden.

Es soll betont werden, dass, obwohl die Erfindung eine Kraftmessvorrichtung geringer Breite bereitstellen kann, welche nur einen einzigen Lagerbereich bzw. nur ein einziges erstes und/oder zweites Kraftübertragungselement umfasst, eine Vorrichtung mit mindestens zwei erste Kraftübertragungselemente und, wenn vorhanden, mindestens zwei zweite Kraftübertragungselemente gleichermaßen im Schutzumfang der Erfindung liegt. Dabei kann es vorteilhaft sein die mindestens zwei ersten Kraftübertragungselemente mit dem jeweils entsprechenden, falls vorhanden, zweiten Kraftübemagungselement in Richtung der axialen Längsausdehnung des Walzenkörpers symmetrisch zueinander anzuordnen. Die Breite des Walzenkörpers in axialer Längsausdehnung einer solchen Anordnung kann zwischen 120 mm und 800 mm liegen, insbesondere zwischen 150 mm und 600 mm.

Die Erfindung umfasst weiterhin ein Verfahren zum Messen einer Kraft einer Materialbahn oder eines Materialstrangs, welche eine oben beschriebene erfindungsgemäße Kraftmessvorrichtung umfasst. Der Sensor kann die Reaktion des mindestens einen ersten Kraftübertragungselements durch Dehnung, Stauchung oder sonstige Formveränderung in einer Richtung parallel zur Drehachse des mindestens einen Walzenkörpers detektieren.

Es kann eine Messschaltung verwendet werden, welche die vom Sensor detektierte Dehnung, Stauchung oder sonstige Formveränderung des ersten Kraftübertragungselements in ein Messsignal umgewandelt. Weiterhin kann eine elektrische Verstärkerschaltung zur Messsignalaufbereitung zum Einsatz kommen. Das Messsignal kann dann in einer Verarbeitungseinheit verarbeitet werden, und so ein die Kraft der Materialbahn oder des Materialstrangs repräsentierendes Ausgangssignal erzeugt werden. In einer Anzeigeeinheit kann dem Benutzer dann ein Wert angezeigt werden, welcher dem Ausgangssignal oder Messsignal entspricht.

In einer bevorzugten Ausführungsform ist ein Sensor, wie oben beschrieben, ein Dehnmessstreifen, dessen Widerstand durch die Dehnung, Stauchung oder sonstige Formveränderung des mindestens einen ersten Kraftübertragungselements verändert wird. Die kraftproportionale Widerstandsänderung des Dehnmessstreifens kann durch eine Brückenschaltung, insbesondere eine Wheatstone-Brückenschaltung, in ein Ausgangssignal umgewandelt werden.

### Kurzbeschreibung der Zeichnungen

Die vorliegende Erfindung wird nachfolgend anhand bevorzugter Ausführungsformen unter Bezug auf die beigefügten Zeichnungen erläutert.
- **Fig. 1**: zeigt einen Längsschnitt einer Vorrichtung zum Messen einer Zugkraft innerhalb einer Materialbahn nach einer Ausführungsform der vorliegenden Erfindung.
- **Fig. 2**: zeigt den Querschnitt einer Vorrichtung gemäß Fig.1.
- **Fig. 3a**: zeigt einen Längsschnitt eines ersten Kraftübertragungselementes .
- **Fig. 3b**: zeigt einen Querschnitt eines ersten Kraftübertragungselementes gemäß Fig. 3a.
- **Fig. 3c**: zeigt eine Draufsicht eines ersten Kraftübertragungselementes gemäß Fig. 3a.
- **Fig. 4**: einen Längsschnitt einer Vorrichtung zum Vorrichtung zum Messen einer Zugkraft innerhalb einer Materialbahn mit zwei symmetrisch angeordneten ersten Kraftübertragungselementen .
- **Fig. 5**: zeigt eine Draufsicht einer Vorrichtung zum Messen von Zugkräften innerhalb mehrerer Materialbahnen mittels mehrerer Walzenkomponenten (hier sechs) nach einer weiteren Ausführungsform der vorliegenden Erfindung.

### Detaillierte Beschreibung der Zeichnungen

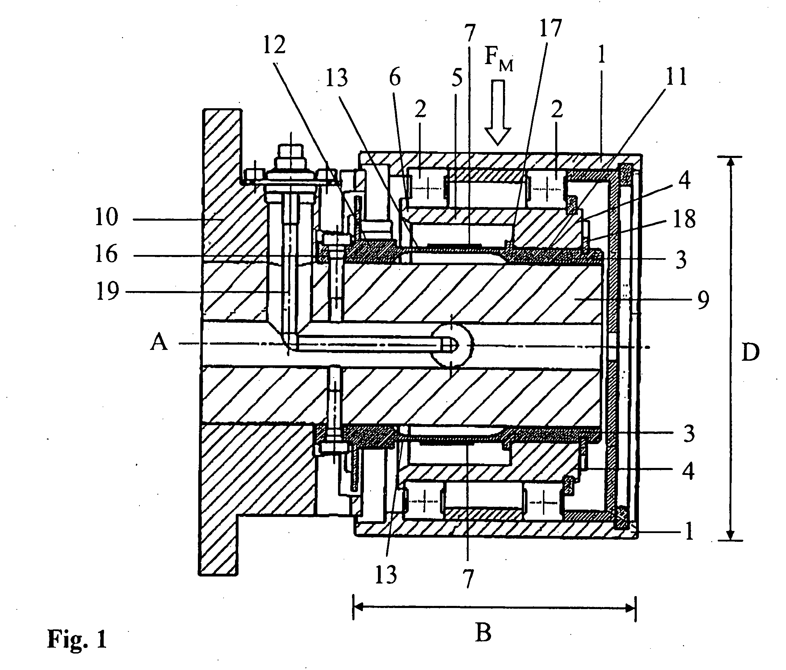

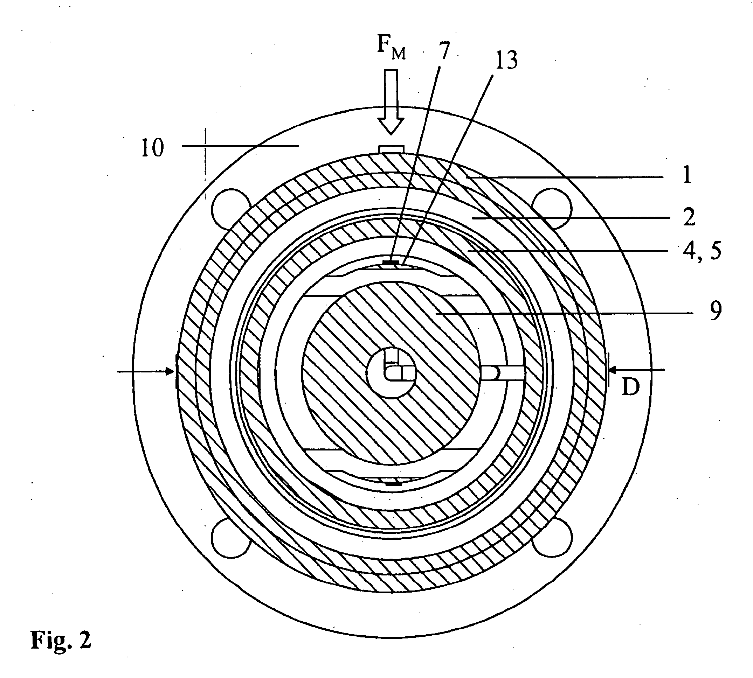

**Fig. 1** und **Fig. 2** zeigen einen Längsschnitt und einen Querschnitt der Vorrichtung nach einer Ausführungsform der vorliegenden Erfindung. Eine derartige Vorrichtung wird verwendet zum Messen einer Zugkraft innerhalb einer Materialbahn oder eines Materialstrangs bzw. einer Kraft **F_{M},** die von der Materialbahn oder Materialstrang auf die Vorrichtung ausgeübt wird. Alternativ kann auch eine Übertragungskraft **F_{Ü},** die aus der von der Materialbahn oder dem Materialstrang auf die Vorrichtung ausgeübten Kraft **F_{M}** resultiert, gemessen werde. Derartige Vorrichtungen werden insbesondere in Anlagen zum Befördern und/oder Verarbeiten von Materialbahnen oder Materialsträngen verwendet.

Die Vorrichtung nach **Fig. 1** und **Fig. 2** umfasst einen Walzenkörper **1,** zwei Lager **2,** auf denen der Walzenkörper 1 drehbar gelagert ist, und ein erstes Kraftübertragungselement **3** zum Übertragen der Übertragungskraft **F_{Ü}.** Das erste Kraftübertragungselement **3** ist dazu ausgelegt, auf die Übertragungskraft **F_{Ü}** durch eine Dehnung, Stauchung oder sonstige Formveränderung in einer Richtung parallel zur Drehachse **A** des Walzenkörpers **1** zu reagieren. Die Lager **2** können Wälzlager, insbesondere Kugellager bzw. Pendelkugellager sein. Es können jedoch auch andere konventionelle Lagertypen verwendet werden. Der Durchmesser **D** des Walzenkörpers **1** kann zwischen 40 mm und 200 mm liegen, insbesondere zwischen 60 mm und 120mm.

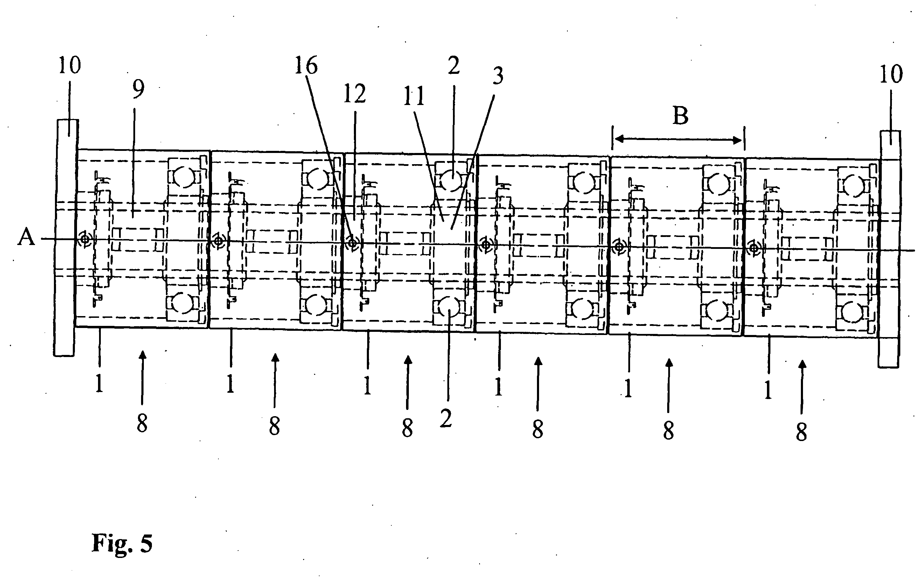

Die Vorrichtung ist auf einer Welle **9** montiert, welche im Inneren des zugehörigen Walzenkörpers **1** in Richtung dessen axialer Längsausdehnung angeordnet ist. Das erste Kraftübertragungselement **3** ist an einem ersten Ende **11** (Lagerbereich; in **Fig. 1** das rechte Ende) beweglich auf der Welle **9** angeordnet, indem in diesem Bereich zwischen dem ersten Kraftübertragungselement **3** und der Welle **9** ein ausreichendes radiales Spiel (maßstäblich nicht zu erkennen in **Fig. 1**) vorhanden ist. Bei Einwirken der Kraft **F_{M},** die von der Materialbahn oder Materialstrang auf die Vorrichtung ausgeübt wird, bzw. der daraus resultierenden Übertragungskraft **F_{Ü}**, senkt sich das erste Ende **11** des ersten Kraftübertragungselementes **3** auf Grund des ausreichenden radialen Spiels ab. Das erste Ende des ersten Kraftübertragungselementes ist ein radial ausgedehntes Element bzw. ein ringförmiges Element. An seinem zweiten Ende **12** (Einspannbereich; in **Fig. 1** das linke Ende) liegt das erste Kraftübertragungselement **3** fest auf der Welle **9** auf. Die Welle **9** kann sowohl einseitig, wie in **Fig. 1** dargestellt, als auch beidseitig, wie in **Fig. 5** zu sehen, mit einem Träger **10** verbunden sein.

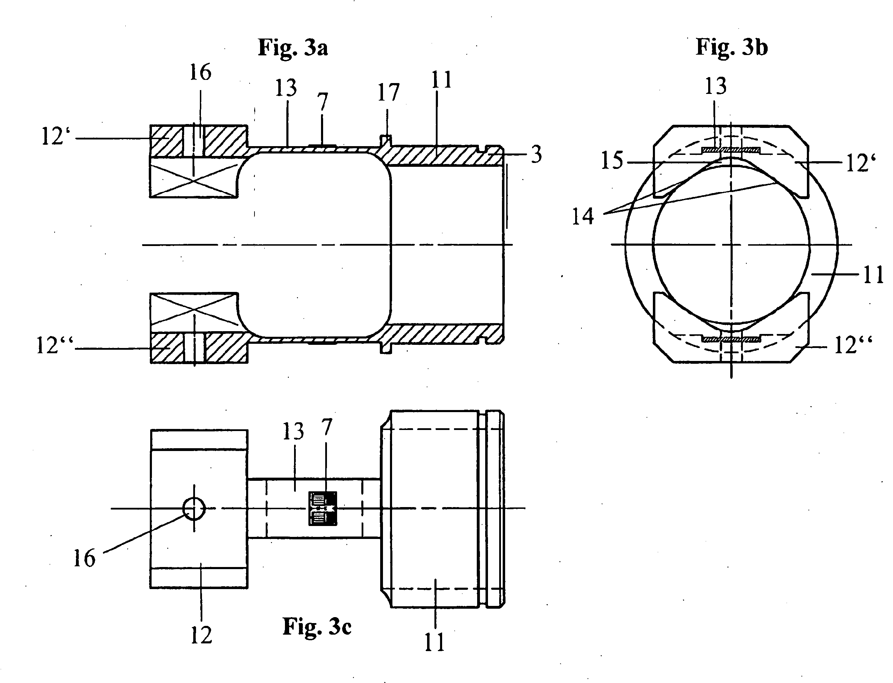

Weiterhin umfasst die Vorrichtung mindestens einen Sensor **7,** der mit dem ersten Kraftübertragungselement **3** in Verbindung steht. Der Sensor **7** kann die Reaktion des ersten Kraftübertragungselements **3** durch Dehnung, Stauchung oder sonstige Formveränderung in einer Richtung parallel zur Drehachse **A** des Walzenkörpers **1** detektieren. Das erste Kraftübertragungselement **3** kann dabei mindestens ein elastisches Element, insbesondere, wie in **Fig. 1** gezeigt, einen Steg **13,** umfassen, auf dem mindestens einer der Sensoren **7** angeordnet ist. Der Sensor **7** wird in **Fig. 1** durch ein Dehnmessstreifen (DMS) gebildet (siehe dazu auch **Fig. 3c**). Wie oben beschrieben senkt sich bei Einwirken der Kraft **F_{M}** bzw. **F_{Ü}** das erste Ende **11** des ersten Kraftübertragungselementes **3** auf Grund des ausreichenden radialen Spiels ab und verbiegt so die beiden Stege **13,** so dass der obere DMS **7** gedehnt und der untere DMS **7** gestaucht wird. Der Widerstand der DMS wird so durch die Formveränderung verändert.

Das auf diese Weise erzeugte elektrische Signal kann durch eine Kabelführung **19,** welche insbesondere durch einen hohlen Innenraum der Welle **9** geführt wird, nach außen geleitet werden. Die kraftproportionale Widerstandsänderung des Dehnmessstreifens kann dann durch eine Brückenschaltung (nicht gezeigt), insbesondere eine Wheatstone-Brückenschaltung, in ein Ausgangssignal umgewandelt werden. Es kann eine Messschaltung (nicht gezeigt) verwendet werden, welche die vom Sensor **7** detektierte Dehnung, Stauchung oder sonstige Formveränderung des ersten Kraftübertragungselements **3** in ein Messsignal umgewandelt. Weiterhin kann eine elektrische Verstärkerschaltung (nicht gezeigt) zur Messsignalaufbereitung zum Einsatz kommen. Das Messsignal kann dann in einer Verarbeitungseinheit (nicht gezeigt) verarbeitet werden, und so ein die Kraft der Materialbahn oder des Materialstrangs repräsentierendes Ausgangssignal erzeugt werden. In einer Anzeigeeinheit (nicht gezeigt) kann dem Benutzer dann ein Wert angezeigt werden, welcher dem Ausgangssignal oder Messsignal entspricht.

In der in **Fig. 1** und **Fig. 2** gezeigten Ausführungsform vorliegenden Erdfindung umfasst die Vorrichtung weiterhin mindestens ein zweites Kraftübertragungselement 4, das sich im Inneren des zugehörigen Walzenkörpers **1** erstreckt und das mit dem ersten Kraftübertragungselement **3** verbunden ist. Diese Verbindung kann, wie in **Fig. 1** gezeigt, durch Ausbilden eines Anschlag- bzw. Positionierungsringes **17** in dem ersten Kraftübertragungselement **3** auf der einen Seite und einem Spannring **18** auf der anderen Seite, welcher in eine Nut des ersten Kraftübertragungselementes **3** passt, erreicht werden. Es kann aber auch eine andere konventionelle Verbindungstechnik eingesetzt werden. Alternativ kann diese Verbindung auch so verstanden werden, dass das zweite Kraftübertragungselement **4** integrierter Teil des ersten Übertragungselementes **3** ist.

Das zweite Kraftübertragungselement **4** kann derart ausgelegt sein, dass es ein Biegemoment **M,** das durch die Kräfte **F_{M}** der Materialbahn oder des Materialstrangs erzeugt wird und das in einer Richtung senkrecht zur Drehachse A des Walzenkörpers **1** wirkt, auf das erste Kraftübertragungselement **3** überträgt. Dabei können der Sensor **7** und das erste Kraftübertragungselement **3** derart ausgelegt sein dass, sie das Biegemoment **M** messen können, welches an einem ersten Ende **11** des ersten Kraftübertragungselementes eingeleitet wird. In einer bevorzugten Ausführungsform umfasst das zweite Kraftübertragungselement **4** zum Übertragen des Biegemomentes **M** ein freitragendes Kraftübertragungselement **5,** wie in **Fig. 1** dargestellt. Dieses ist integrierter Teil des zweiten Kraftübertragungselementes **4.** Es kann jedoch alternativ auch mit diesem verbunden sein. Das freitragende Kraftübertragungselement **5** erstreckt sich in einer Richtung parallel zur Drehachse **A** des Walzenkörpers **1.** Auf dem freitragenden Kraftübertragungselement **5** sind, in Bezug auf dessen axiale Längsausdehnung, zwei Lager 2 voneinander beabstandet angeordnet. Der Vorteil dieser Konstruktion liegt in einer verbesserten Kraftaufnahme im Gegensatz zum Stand der Technik.

Eine solche Konstruktion ermöglicht es zudem eine Kraftmessvorrichtung geringer Breite **B** bereitzustellen, welche nur einen einzigen Lagerbereich **12** bzw. nur ein einziges erstes **3** und/oder zweites **4** Kraftübertragungselement umfasst. Gleichzeitig ist ein Kippen des Walzenkörpers **1** dabei nicht möglich, da das Biegemoment **M,** das durch die Kräfte **F_{M}** der Materialbahn oder des Materialstranges erzeugt wird, der Kippbewegung entgegenwirkt. Die Breite **B** des Walzenkörpers **1** in axialer Längsausdehnung kann bei einer derartigen Anordnung zwischen 70 mm und 200 mm liegen, insbesondere zwischen 90 mm und 150 mm.

Wie in **Fig. 1** gezeigt, ist es für eine bessere Kraftverteilung vorteilhaft die mindestens zwei Lager **2** auf dem freitragenden Kraftübertragungselement **5** in Bezug auf dessen axiale Längsausdehnung symmetrisch zueinander anzuordnen. Ein Lager **2** (in **Fig. 1** rechtes Lager) ist in axialer Längsausdehnung des zugehörigen Walzenkörpers **1** im Wesentlichen an der gleichen Position angeordnet wie das zugehörige zweite Kraftübertragungselement **4,** d.h. hier in dem Bereich, wo das zweite Kraftübertragungselement **4** mit dem ersten Ende **11** des ersten Kraftübertragungselementes 3 verbunden ist. Das andere Lager **2** (in **Fig. 1** linkes Lager) ist entsprechend am freitragenden Ende **6** des zugehörigen freitragenden Kraftübertragungselementes **5** angeordnet. Das freitragende Kraftübertragungselement **5** ist hier eine Hülse, die koaxial im Inneren des Walzenkörpers 1 angeordnet ist.

Eine Ausführungsform des ersten Kraftübertragungselementes **3** wird nun mit Bezug auf **Fig. 3a** bis **3c**, welche jeweils entsprechend einen Längsschnitt, einen Querschnitt und eine Draufsicht des ersten Kraftübertragungselementes **3** zeigen, erklärt werden. Das zweite Ende **12** des ersten Kraftübertragungselementes **3,** welches fest auf der Welle **9** aufliegt, ist zweitteilig **12', 12"** ausgebildet. Jede Innenseite der zwei Teile **12', 12"** liegt jeweils mit zwei Auflageflächen 14 auf der Welle **9** auf, wobei im Bereich zwischen zwei Auflageflächen **14** ein Spiel **15** zwischen der Innenseite des Teils **12', 12"** und der Welle **9** gebildet wird. Im Allgemeinen muss das zweite Ende **12** mit mindestens drei Auflageflächen **14** auf der Welle **9** aufliegen, damit das erste Kraftübertragungselement **3** dort fest auf der Welle **9** aufliegt. Wie in **Fig. 3a** und **3c** dargestellt, weist das zweite Ende eine Durchgangsbohrung 16 auf, um das erste Kraftübertragungselement **3** durch eine Schraubverbindung fest mit der Welle **9** zu verbinden.

Durch diese Anordnung wird eine einfacherer Fertigung und Montage ermöglicht. Das erste Kraftübertragungselement **3** darf im Bereich seines zweiten Endes **12** größere Fertigungstoleranzen aufweisen und ist gleichzeitig einfacher montierbar, da es sich der Welle **9** in diesem Bereich flexibel anpasst. Gleichzeitig wird weiterhin eine präzise Messung gewährleistest, da eine Verdrehung des ersten Kraftübertragungselementes **3** auf Grund von Übertragungskräften **F_{Ü}** wegen der Fixierung der Welle **9** an den Auflageflächen **14** nicht auftreten kann. Des Weiteren wird eine starrere Verbindung mit der Welle **9** und somit höhere Biegesteifigkeit im Bereich des zweiten Endes **12** des ersten Kraftübertragungselementes **3** erreicht, wodurch auch die Eigenfrequenz der Anordnung in diesem Bereich steigt. Eine Schwingungsanregung der Vorrichtung durch eine Drehung der Walze **1** führt also zu einer Frequenz, die erheblich unter der Eigenfrequenz der Anordnung liegt, so dass das Schwingungsverhalten im Bereich des zweiten Endes **12** des ersten Kraftübertragungselementes **3** verbessert ist.

Die Auflageflächen **14** sind dabei, wie in **Fig. 3b** zu erkennen, eben ausgebildet. Es sind jedoch auch andere Formen der Auflageflächen **14** denkbar, solange gewährleistet bleibt, dass das erste Kraftübertragungselement **3** an seinem zweiten Ende **12** fest auf der Welle **9** aufliegt. Es kann vorteilhaft sein, dass die Verlängerungen zweier Auflageflächen **14** eines Teils **12', 12"** des zweiten Endes **12** des erstes Kraftübertragungselementes **3** einen Winkel im Bereich von 90° bis 140° bilden, insbesondere im Bereich von 105° bis 115°. In **Fig. 3b** ergibt sich ein entsprechender Winkel von ungefähr 110°. Dort gehen die beiden Auflageflächen **14** parabelförmig ineinander über und können so das Spiel **15** zwischen der Innenseite der Teile **12', 12"** und der Welle **9** formen.

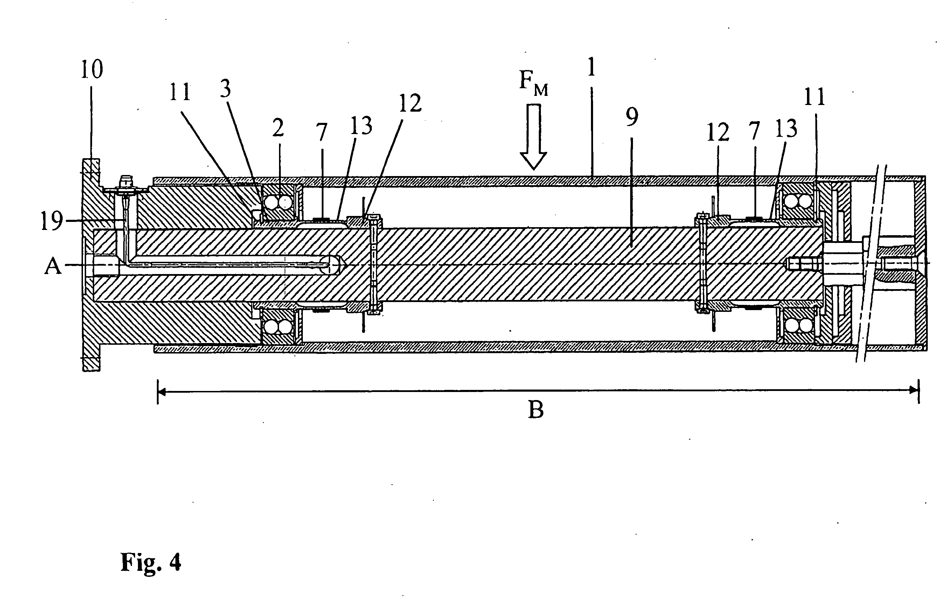

Es soll betont werden, dass, obwohl die Erfindung eine Kraftmessvorrichtung geringer Breite **B** bereitstellen kann, welche nur einen einzigen Lagerbereich **11** bzw. nur ein einziges erstes **3** und/oder zweites **4** Kraftübertragungselement umfasst, eine Vorrichtung mit mindestens zwei ersten **3** Kraftübertragungselementen und, wenn vorhanden, mindestens zwei zweiten **4** Kraftübertragungselementen, gleichermaßen im Schutzumfang der Erfindung liegt. Ein Längsschnitt einer solchen Vorrichtung mit zwei symmetrisch angeordneten ersten Kraftübertragungselementen **3** ist in **Fig. 4** dargestellt.

Die zwei ersten Kraftübertragungselemente **3** sind in Richtung der axialen Längsausdehnung des Walzenkörpers **1** symmetrisch zueinander angeordnet. Die Breite **B** des Walzenkörpers **1** in axialer Längsausdehnung einer solchen Anordnung kann zwischen 120 mm und 800 mm liegen, insbesondere zwischen 150 mm und 600 mm.

Sowohl bei der Ausführungsform mit einem einzigen ersten **3** und/oder zweiten **4** Kraftübertragungselement (siehe hierzu **Fig. 1**) als auch bei der Ausführungsform mit zwei ersten **3** und/oder zweiten **4** Kraftübertragungselementen, wie soeben beschrieben (siehe hierzu **Fig. 4**), ist es vorteilhaft einen Überlastschutz vorzusehen. Dabei wird eine mögliche axiale Bewegung des ersten **3** und/oder zweiten **4** Kraftübertragungselementes bei der Dimensionierung der Vorrichtung berücksichtigt. Der Träger **10** und/oder ein entsprechendes anderes Begrenzungselement kann auf eine solche Weise mit der Welle **9** verbunden werden, dass die Anordnung für eine maximal mögliche bzw. erlaubte Überlast ausgelegt ist. Dazu kann ein entsprechendes Spiel zwischen dem ersten Ende **11** des ersten Kraftübertragungselementes **3** und dem Träger **10** und/oder einem entsprechenden anderen Begrenzungselement vorgesehen sein, wie in **Fig. 1** und **Fig. 4** gezeigt.

**Fig. 5** zeigt eine Draufsicht einer Vorrichtung zum Messen von Zugkräften innerhalb mehrerer Materialbahnen mittels mehrerer Walzenkomponenten **8** nach einer weiteren Ausführungsform der vorliegenden Erfindung. Diese "segmentierte" Kraftmessvorrichtung umfasst in dieser Darstellung sechs derartige Walzenkomponenten **8.** Eine Walzenkomponente **8** wird jeweils gebildet durch einen Walzenkörper **1,** ein erstes Kraftübertragungselement **3** und, falls vorhanden, ein zweites Kraftübertragungselement **4.** Die Walzenkörper **1** sind in Bezug auf ihre Drehachse **A** koaxial nebeneinander angeordnet. Die Walzenkomponenten **8** können nacheinander auf die Welle **9** aufgeschoben und mit dieser verbunden werden. Die Verbindung erfolgt hier mittels einer Schraubverbindung durch eine Durchgangsbohrung **16** im zweiten Ende **12** des ersten Kraftübertragungselementes **3.** Es kann aber auch eine andere konventionelle Verbindungstechnik eingesetzt werden.

## Patentansprüche

1. Vorrichtung zum Messen einer Zugkraft innerhalb mindestens einer Materialbahn oder mindestens eines Materialstrangs, einer Kraft (FM), die von der mindestens einen Materialbahn oder dem mindestens einen Materialstrang auf die Vorrichtung ausgeübt wird, oder einer Übertragungskraft (FÜ), die aus der von der mindestens einen Materialbahn oder dem mindestens einen Materialstrang auf die Vorrichtung ausgeübten Kraft (FM) resultiert, welche folgendes umfasst:
- mindestens einen Walzenkörper (1),
- mindestens ein Lager (2), auf denen der mindestens eine Walzenkörper (1) drehbar gelagert ist,
- eine Welle (9), welche im Inneren des zugehörigen Walzenkörpers (1) in Richtung dessen axialer Längsausdehnung angeordnet ist,
- mindestens ein erstes Kraftübertragungselement (3) zum Übertragen der Übertragungskraft (FÜ), welches dazu ausgelegt ist, auf die Übertragungskraft (FÜ) durch eine Dehnung, Stauchung oder sonstige Formveränderung relativ zur Drehachse (A) des mindestens einen Walzenkörpers (1) zu reagieren, wobei das erste Kraftübertragungselement (3) an einem ersten Ende (11) durch ein ausreichendes radiales Spiel beweglich auf der Welle (9) angeordnet ist, so dass es sich in eine Richtung senkrecht zur Drehachse (A) des Walzenkörpers (1) zur Welle (9) hin absenken kann, und an einem zweiten Ende (12) fest auf der Welle (9) aufliegt, und
- mindestens einen Sensor (7), der mit dem mindestens einen ersten Kraftübertragungselement (3) in Verbindung steht,
**gekennzeichnet durch**
- mindestens ein zweites Kraftübertragungselement (4), das sich im Inneren des zugehörigen Walzenkörpers (1) erstreckt, das mit dem ersten Kraftübertragungselement (3) verbunden ist, und das ausgelegt ist das Biegemoment (M), das **durch** die Kräfte (FM) der Materialbahn oder des Materialstrangs erzeugt wird und das in einer Richtung senkrecht zur Drehachse (A) des Walzenkörpers (1) wirkt, auf das erste Kraftübertragungselement (3) zu übertragen, und
- mindestens ein freitragendes Kraftübertragungselement (5) zum Übertragen des Biegemomentes (M), das integrierter Teil des zweiten Kraftübertragungselementes (4) ist oder mit diesem verbunden ist, wobei sich das freitragende Kraftübertragungselement (5) in einer Richtung parallel zur Drehachse (A) des Walzenkörpers (1) erstreckt.

2. Vorrichtung gemäss Anspruch 1, **dadurch gekennzeichnet, dass** mindestens zwei Lager (2) auf dem freitragenden Kraftübertragungselement (5) in Bezug auf dessen axiale Längsausdehnung voneinander beabstandet angeordnet sind.

3. Vorrichtung gemäss einem der vorhergehenden Ansprüche, **dadurch gekennzeichnet, dass** der Sensor (7) und das erste Kraftübertragungselement (3) ausgelegt sind, ein Biegemoment (M) zu messen, das durch die Kräfte (FM) der Materialbahn oder des Materialstrangs erzeugt wird, das in eine Richtung senkrecht zur Drehachse (A) des Walzenkörpers (1) wirkt und das an einem ersten Ende (11) des ersten Kraftübertragungselementes (3) eingeleitet wird.

4. Vorrichtung gemäss einem der vorhergehenden Ansprüche, **dadurch gekennzeichnet, dass** die mindestens zwei Lager (2) auf dem freitragenden Kraftübertragungselement (5) in Bezug auf dessen axiale Längsausdehnung symmetrisch zueinander angeordnet sind.

5. Vorrichtung gemäss einem der vorhergehenden Ansprüche, **dadurch gekennzeichnet, dass** mindestens ein Lager (2) in axialer Längsausdehnung des zugehörigen Walzenkörpers (1) im Wesentlichen an der gleichen Position angeordnet ist wie das zugehörige zweite Kraftübertragungselement (4) und mindestens ein Lager (2) am freitragenden Ende (6) des zugehörigen freitragenden Kraftübertragungselementes (5) angeordnet ist.

6. Vorrichtung gemäss einem der vorhergehenden Ansprüche, **dadurch gekennzeichnet, dass** das freitragende Kraftübertragungselement (5) ein radial ausgedehntes Element, insbesondere ein ringförmiges Element, insbesondere eine Hülse ist, das koaxial im Inneren des Walzenkörpers (1) angeordnet ist.

7. Vorrichtung gemäss einem der vorhergehenden Ansprüche, **dadurch gekennzeichnet, dass** das zweite Ende (12) des ersten Kraftübertragungselement (3) mindestens zweiteilig ausgebildet ist.

8. Vorrichtung gemäss Anspruch 7, **dadurch gekennzeichnet, dass** die Innenseite des zweiten Endes (12) des ersten Kraftübertragungselement (3) mit mindestens drei Auflageflächen (14) auf der Welle (9) aufliegt.

9. Vorrichtung gemäss Anspruch 7 oder 8, **dadurch gekennzeichnet, dass** die Innenseite eines Teils (12', 12") des zweiten Endes (12) des ersten Kraftübertragungselement (3) jeweils mit mindestens zwei Auflageflächen (14) auf der Welle (9) aufliegt, wobei im Bereich zwischen zwei Auflageflächen (14) ein Spiel (15) zwischen der Innenseite des Teils (12', 12") und der Welle (9) gebildet wird.

10. Vorrichtung gemäss Anspruch 8 oder 9, **dadurch gekennzeichnet, dass** die Auflageflächen eben sind.

11. Vorrichtung gemäss einem der Ansprüche 7 bis 10, **dadurch gekennzeichnet, dass** die Verlängerungen zweier Auflageflächen eines Teils des zweiten Endes (121) des erstes Kraftübertragungselement (3) einen Winkel im Bereich von 90° bis 140° bilden, insbesondere im Bereich von 105° bis 115°.

12. Verfahren zum Messen einer Zugkraft innerhalb mindestens einer Materialbahn oder mindestens eines Materialstrangs, einer Kraft (FM), die von der mindestens einen Materialbahn oder dem mindestens einen Materialstrang auf die Vorrichtung ausgeübt wird oder einer Übertragungskraft (FÜ), die aus der von der mindestens einen Materialbahn oder dem mindestens einen Materialstrang auf die Vorrichtung ausgeübten Kraft (FM) resultiert, **dadurch gekennzeichnet, dass** eine Vorrichtung gemäss einem der vorhergehenden Ansprüche verwendet wird.

13. Verfahren gemäss Anspruch 12, **dadurch gekennzeichnet, dass** der Sensor (7) die Reaktion des mindestens einen ersten Kraftübertragungselements (3) durch Dehnung, Stauchung oder Formveränderung in einer Richtung parallel zur Drehachse (A) des mindestens einen Walzenkörpers (1) detektiert.

14. Verfahren gemäss Anspruch 13, **dadurch gekennzeichnet, dass** mindestens ein Sensor (7) ein Dehnmessstreifen ist, dessen Widerstand durch die Dehnung, Stauchung oder Formveränderung des mindestens einen ersten Kraftübertragungselements (3) verändert wird.

15. Verfahren gemäss einem der Ansprüche 12 bis 14, **dadurch gekennzeichnet, dass** die vom Sensor (7) detektierte Dehnung, Stauchung oder Formveränderung des mindestens einen ersten Kraftübertragungselements (3) durch eine Messschaltung in ein Messsignal umgewandelt wird.

16. Verfahren gemäss Anspruch 13, **dadurch gekennzeichnet, dass** die Widerstandsänderung des Dehnmessstreifens durch eine Brückenschaltung in ein Ausgangssignal umgewandelt wird.

17. Verfahren gemäss einem der Ansprüche 15 oder 16, **dadurch gekennzeichnet, dass** das Messsignal in einer Verarbeitungseinheit verarbeitet wird und ein die Zugkraft innerhalb der mindestens einen Materialbahn oder des mindestens einen Materialstrangs, die Kraft (FM), die von der mindestens einen Materialbahn oder dem mindestens einen Materialstrang auf die Vorrichtung ausgeübt wird oder die Übertragungskraft (FÜ), die aus der von der mindestens einen Materialbahn oder dem mindestens einen Materialstrang auf die Vorrichtung ausgeübten Kraft (FM) resultiert, repräsentierendes Ausgangssignal erzeugt wird.

18. Verfahren gemäss Anspruch 17, **dadurch gekennzeichnet, dass** in einer Anzeigeeinheit ein Wert angezeigt wird, welcher dem Ausgangssignal oder Messsignal entspricht.

19. Anlage zum Befördern und/oder Verarbeiten von mindestens einer Materialbahn oder von mindestens einem Materialstrang, **dadurch gekennzeichnet, dass** die Anlage mindestens eine Vorrichtung gemäss einem der Ansprüche 1 bis 10 umfasst.

## Claims

1. A device for measuring a drag force within at least one material sheet or at least one material thread, a force (FM) which is exercised by the at least one material sheet or the at least one material thread on the device, or a transmission force (FÜ) which results from the force transmitted by the at least one material sheet or at least one material thread to the device, comprising:
- at least one roll body (1),
- at least one bearing (2) on which the at least one roll body (1) is rotatably mounted,
- a shaft (9) which is arranged in the interior of the corresponding roll body (1) in a direction of its axial lengthwise extension,
- at least one force transmission element (3) for transmitting a transmission force (FÜ), configured to respond to a transmission force (FÜ) by an elongation, shortening, or other change of shape relative to a rotation axis (A) of the at least one roll body (1), wherein the first force transmission element (3) is movably arranged at a first end (11) by a sufficient radial play, so that it can lower in a direction perpendicular to the rotation axis (A) of the roll body (1) towards the shaft (9), and firmly rests at a second end (12) on the shaft (9), and
- at least one sensor (7) being connected with the at least one force transmission element (3),
**characterized in**
- at least one second force transmission element (4), extending in the interior of the corresponding roll body (1), which is connected to the first force transmission element (3), and configured to transmit the bending moment (M) generated by the forces (FM) of the material sheet or the material thread and being effective in a direction perpendicular to the rotation axis (A) of the roll body (1) to the first force transmission element (3), and
- at least one self-supporting force transmission element (5) for transmitting the bending moment (M), which is an integrated part of the second force transmission element (4) or connected to it, wherein the self-supporting force transmission element (5) extends in a direction parallel to the rotation axis (A) of the roll body (1).

2. The device of claim 1, **characterized in that** at least two bearings (2) are spaced apart on the self-supporting force transmission element (5) relative to its axial longitudinal extension.

3. The device according to anyone of the preceding claims, **characterized in that** the sensor (7) and the first force transmission element (3) are configured to measure a bending moment (M), which is generated by the forces (FM) of the material sheet or the material thread, being effective in a direction perpendicular to the rotation axis (A) of the roll body (1) and being induced at the first end (11) of the first force transmission element (3).

4. The device according to anyone of the preceding claims, **characterized in that** the at least two bearings (2) are arranged symmetrically with respect to each other on the self-supporting force transmission element (5) relative to its axial lengthwise extension.

5. The device according to anyone of the preceding claims, **characterized in that** at least one bearing (2) is arranged substantially in the same position as a corresponding second force transmission element (4) in axial lengthwise extension of the corresponding roll body (1) and least one bearing (2) is arranged at the self-supporting end (6) of the corresponding self-supporting force transmission element (5).

6. The device according to anyone of the preceding claims, **characterized in that** the self-supporting force transmission element (5) is a radially extending element, preferably a ring-shaped element, preferably a hull, being arranged coaxially in the interior of the roll body (1).

7. The device of any of the preceding claims, **characterized in that** the second end (12) of the first force transmission element (3) has at least a two-part form.

8. The device according to claim 7, **characterized in that** the inner side of the second end (12) of the first force transmission element (3) rests on the shaft (9) on at least three rest surfaces (14).

9. The device according to claim 7 or 8, **characterized in that** the inner surface of a portion (12', 12") of the second end (12) of the first force transmission element (3) each rests on at least two rest surfaces (14) on the shaft (9), wherein in the region between two rest surfaces (14) a play (15) is formed between the inner surface of the portion (12', 12") and the shaft (9).

10. The device according to claims 8 or 9, **characterized in that** the rest surfaces are plane.

11. The device according to anyone of the claims 7 to 10, **characterized in that** the extensions of two rest surfaces of a portion of the second end (121) of the first force transmission element (3) form an angle in the range of 90° to 140°, preferably in the range of 105° to 115°.

12. A method for measuring a drag force within at least one material sheet or at least one material thread, a force (FM), which is exercised by the at least one material sheet or the at least one material thread on the device or a transmission force (FÜ), which results from the force (FM) being exercised by the at least one material sheet or the at least one material thread to the device, **characterized in that** a device according to anyone of the preceding claims is used.

13. The method according to claim 12, **characterized in that** a sensor (7) detects the response of the at least one force transmission element (3) by elongation, shortening or change of shape in a direction parallel to the rotation axis (A) of the at least one roll body (1).

14. The method according to claim 13, **characterized in that** at least one sensor is a strain gauge the resistance of which changes by the elongation, shortening or change of shape of the at least one force transmission element (3).

15. The method of one of claims 12 to 14, **characterized in that** the elongation, shortening or change of shape of the at least one force transmission element (3) detected by the sensor (7) is converted into a measurement signal by a measurement circuitry.

16. The method according to claim 13, **characterized in that** the change in resistance of the strain gauge is converted into an output signal by a bridge circuit.

17. The method according to anyone of claims 15 or 16, **characterized in that** the measurement signal is processed in a processing unit and an output signal is generated which represents the drag force within the at least one material sheet or the at least one material thread, the force (FM) being exercised by the at least one material sheet or the at least one material thread to the device or the transmission force (FÜ) being exercised by the at least one material sheet or the at least one material thread to the device.

18. The method according to claim 17, **characterized in that** a parameter is indicated on an indicating device corresponding to an output signal or a measurement signal.

19. A system for transporting and or processing of at least one material sheet or at least one material thread, **characterized in that** the system comprises at least one device according to anyone of the claims 1 to 10.

## Revendications

1. Dispositif pour mesurer une force de traction à l'intérieur d'au moins une nappe de matériau ou d'au moins un brin de matériau, d'une force (FM) qui est exercée par ladite au moins une nappe de matériau ou ledit au moins un brin de matériau sur le dispositif, ou d'une force de transmission (FU), qui résulte de la force (FM) exercée par ladite au moins une nappe de matériau ou ledit au moins un brin de matériau sur le dispositif, le dispositif comprenant les éléments suivants :
- au moins un corps de roulement (1),
- au moins un palier (2) sur lequel ledit au moins un corps de roulement (1) est monté rotatif,
- un arbre (9) qui est agencé à l'intérieur du corps de roulement associé (1) en direction de son extension longitudinale axiale,
- au moins un premier élément de transmission de force (3) pour transmettre la force de transmission (FU) et qui est conçu pour réagir à la force de transmission (FU) par un allongement, un écrasement ou une autre modification de forme par rapport à l'axe de rotation (A) dudit au moins un corps de roulement (1), dans lequel le premier élément de transmission de force (3) est agencé à une première extrémité (11) en déplacement sur l'arbre (9) grâce à un jeu radial suffisant de telle sorte qu'il est capable de s'abaisser vers l'arbre (9) dans une direction perpendiculaire à l'axe de rotation (A) du corps de roulement (1), et repose fermement sur l'arbre (9) à une seconde extrémité (12), et
- au moins un capteur (7) qui est en liaison avec ledit au moins un premier élément de transmission de force (3),
**caractérisé par**
- au moins un second élément de transmission de force (4), qui s'étend à l'intérieur du corps de roulement associé (1), qui est relié au premier élément de transmission de force (3) et qui est conçu pour transmettre au premier élément de transmission de force (3) le moment de flexion (M), qui est engendré par les forces (FM) de la nappe de matériau ou du brin de matériau et qui agit dans une direction perpendiculaire à l'axe de rotation (A) du corps de roulement (1), et
- au moins un élément de transmission de force (5) autoportant pour transmettre le moment de flexion (M), qui fait partie intégrante du second élément de transmission de force (4) ou qui est relié à celui-ci, et dans lequel l'élément de transmission de force (5) autoportant s'étend dans une direction parallèle à l'axe de rotation (A) du corps de roulement (1).

2. Dispositif selon la revendication 1, **caractérisé en ce qu'**au moins deux paliers (2) sont agencés sur l'élément de transmission de force (5) autoportant, à distance l'un de l'autre par référence à son extension longitudinale axiale.

3. Dispositif selon l'une des revendications précédentes, **caractérisé en ce que** le capteur (7) et le premier élément de transmission de force (3) sont conçus pour mesurer un moment de flexion (M) qui est engendré par les forces (FM) de la nappe de matériau ou du brin de matériau, qui agit dans une direction perpendiculaire à l'axe de rotation (A) du corps de roulement (A), et qui est appliqué à une première extrémité (11) du premier élément de transmission de force (3).

4. Dispositif selon l'une des revendications précédentes, **caractérisé en ce que** lesdits au moins deux paliers (2) sont agencés symétriquement l'un par rapport à l'autre sur l'élément de transmission de force (5) autoportant, par référence à son extension longitudinale axiale.

5. Dispositif selon l'une des revendications précédentes, **caractérisé en ce qu'**au moins un palier (2) est agencé, en extension longitudinale axiale du corps de roulement associé (1) sensiblement à la même position que le second élément de transmission de force associé (4), et au moins un palier (2) est agencé à l'extrémité autoportante (6) de l'élément de transmission de force (5) autoportant associé.

6. Dispositif selon l'une des revendications précédentes, **caractérisé en ce que** l'élément de transmission de force (5) autoportant est un élément allongé radialement, en particulier un élément de forme annulaire et en particulier une douille qui est agencée coaxialement à l'intérieur du corps de roulement (1).

7. Dispositif selon l'une des revendications précédentes, **caractérisé en ce que** la seconde extrémité (12) du premier élément de transmission de force (3) est réalisée en au moins deux pièces.

8. Dispositif selon la revendication 7, **caractérisé en ce que** la face intérieure de la seconde extrémité (12) du premier élément de transmission de force (3) repose sur l'arbre (9) par au moins trois surfaces d'appui (14).

9. Dispositif selon la revendication 7 ou 8, **caractérisé en ce que** la face intérieure d'une partie (12', 12") de la seconde extrémité (12) du premier élément de transmission de force (3) repose sur l'arbre (9) respectivement par au moins deux surfaces d'appui (14), et dans la région entre deux surfaces d'appui (14) un jeu (15) est formé entre la face intérieure de la partie (12', 12") et l'arbre (9).

10. Dispositif selon la revendication 8 ou 9, **caractérisé en ce que** les surfaces d'appui sont planes.

11. Dispositif selon l'une des revendications 7 à 10, **caractérisé en ce que** les prolongements de deux surfaces d'appui d'une partie de la seconde extrémité (121) du premier élément de transmission de force (3) forment un angle dans la plage de 90° à 140°, en particulier dans la plage de 105° à 115°.

12. Procédé pour mesurer une force de traction à l'intérieur d'au moins une nappe de matériau ou d'au moins un brin de matériau, d'une force (FM) qui est exercée par ladite au moins une nappe de matériau ou ledit au moins un brin de matériau sur le dispositif ou une force de transmission (FU) qui résulte de la force (FM) exercée par ladite au moins une nappe de matériau ou ledit au moins un brin de matériau sur le dispositif, **caractérisé en ce que** l'on utilise un dispositif selon l'une des revendications précédentes.

13. Procédé selon la revendication 12, **caractérisé en ce que** le capteur (5) détecte la réaction dudit au moins un élément de transmission de force (3) par allongement, écrasement ou modification de forme dans une direction parallèle à l'axe de rotation (A) dudit au moins un corps de roulement (1).

14. Procédé selon la revendication 13, **caractérisé en ce qu'**au moins un capteur (7) est une jauge de contraintes dont la résistance est modifiée par allongement, écrasement ou modification de forme dudit au moins un premier élément de transmission de force (3).

15. Procédé selon l'une des revendications 12 à 14, **caractérisé en ce que** l'allongement, l'écrasement ou la modification de forme, détecté(e) par le capteur (7), dudit au moins un premier élément de transmission de force (3) est converti(e) par un circuit de mesure en un signal de mesure.

16. Procédé selon la revendication 13, **caractérisé en ce que** la variation de résistance de la jauge de contrainte est convertie en un signal de sortie par un circuit en pont.

17. Procédé selon l'une des revendications 15 ou 16, **caractérisé en ce que** le signal de mesure est traité dans une unité de traitement, et un signal de sortie est généré, représentant la force de traction à l'intérieur de ladite au moins une nappe de matériau ou dudit au moins un brin de matériau, la force (FM), qui est exercée par ladite au moins une nappe de matériau ou ledit au moins un brin de matériau sur le dispositif, ou la force de transmission (FU), qui résulte de la force (FM) exercée par ladite au moins une nappe de matériau ou par ledit au moins un brin de matériau sur le dispositif.

18. Procédé selon la revendication 17, **caractérisé en ce qu'**une valeur est affichée dans une unité d'affichage, qui correspond au signal de sortie ou au signal de mesure.

19. Installation pour convoyer et/ou traiter au moins une nappe de matériau ou au moins un brin de matériau, **caractérisé en ce que** l'installation comprend au moins un dispositif selon l'une des revendications 1 à 10.
